# EUROPEAN PATENT APPLICATION

(11) **EP 4 410 699 A1**
(43) Date of publication of application: **07.08.2024**
(21) Application number: 21959352.2
(22) Date of filing: 30.09.2021
(51) Int. Cl.: B65D 8/20, H01M 50/167

(54) **DOUBLE-SEAMED STRUCTURE, AND BATTERY AND FOOD CAN HAVING SAME**

(71) Applicant: Toyo Seikan Group Holdings, Ltd., Shinagawa-ku Tokyo 141-8627 (JP)
(72) Inventor: KOBAYASHI, Tomomi, Yokohama-shi, Kanagawa 240-0062 (JP); TAKAO, Kenichi, Yokohama-shi, Kanagawa 240-0062 (JP)
(74) Representative: Piticco, Lorena
(86) International application number: PCT/JP2021/036027
(87) International publication number: WO 2023/053310

(57) **Abstract**

A double seaming structure (100) includes a first metal member (111) having a first turned-back portion (113) at a first end portion (112) and a second metal member (121). A first region (115) including the first end portion (112) of the first metal member (111) and a second region (125) including a second end portion (122) of the second metal member (121) are in close contact with each other and sealed.

## Description

### Technical Field

The present invention relates to a double seaming structure and a battery and a can having the same.

### Background Art

Double seaming has been known as a method for joining a can body and a can lid in a metal container. The double seaming achieves less expensive and highly reliable sealing. For example, Patent Document 1 discloses the use of double seaming for a case for an electrical device. Patent Document 1 discloses that to insulate a can body from a can lid, the double seaming is performed with a stretched film sandwiched therebetween. The double seaming sometimes needs strong joining withstanding a relatively high internal pressure.

### Citation List

### Patent Literature

Patent Document 1: JP 2002-343310 A

### Summary of Invention

### Technical Problem

An object of the present invention is to provide an excellent double seaming structure.

### Solution to Problem

According to an aspect of the present invention, a double seaming structure includes a first metal member having a first turned-back portion at a first end portion and a second metal member. A first region including the first end of the first metal member and a second region including a second end portion of the second metal member are in close contact with each other and sealed by double seaming.

### Advantageous Effects of Invention

The present invention can provide an excellent double seaming structure.

### Brief Description of Drawings

FIG. 1 is a partially cutaway perspective view illustrating an overview of an example of a configuration of a battery according to a first embodiment.
FIG. 2 is an end view illustrating an overview of an example of a configuration of a double seaming structure of a seaming portion according to the first embodiment.
FIG. 3 is a flowchart illustrating an overview of an example of a method of manufacturing a battery according to the first embodiment.
FIG. 4 is a cross-sectional view illustrating an overview of an example of the shapes of a can body and a can lid before double seaming.
FIG. 5A is a diagram illustrating a first method of forming a turned-back portion.
FIG. 5B is a diagram illustrating a second method of forming the turned-back portion.
FIG. 6 is a diagram illustrating double seaming according to the first embodiment.
FIG. 7 is a diagram illustrating double seaming according to a comparative example.
FIG. 8 is a diagram illustrating a possible state as a result of rise in internal pressure, with the double seaming structure according to the comparative example.
FIG. 9 is an end view illustrating an overview of an example of a configuration of a double seaming structure according to a second embodiment.
FIG. 10 is a schematic view for explaining double seaming according to the second embodiment.
FIG. 11A is an end view illustrating an overview of an example of a configuration of a double seaming structure according to a first modified example.
FIG. 11B is an end view illustrating an overview of an example of another configuration of the double seaming structure according to the first modified example.
FIG. 11C is an end view illustrating an overview of an example of a configuration of a double seaming structure according to a second modified example.
FIG. 11D is an end view illustrating an overview of an example of another configuration of the double seaming structure according to the second modified example.
FIG. 11E is an end view illustrating an overview of an example of a configuration of a double seaming structure according to a third modified example.
FIG. 11F is an end view illustrating an overview of an example of a configuration of a double seaming structure according to a fourth modified example.
FIG. 11G is an end view illustrating an overview of an example of a configuration of a double seaming structure according to a fifth modified example.
FIG. 11H is a diagram illustrating a method of forming a turned-back portion according to the fifth modified example.

### Description of Embodiments

### First Embodiment

The first embodiment will be described with reference to the drawings. The present embodiment relates to a battery. The present embodiment relates particularly to a battery including a battery container in which a metal can body and a metal can lid are sealed by a double seaming structure. The can body and the can lid are insulated from each other in the double seaming structure. The can body and the can lid each function as an electrode.

### Battery Structure

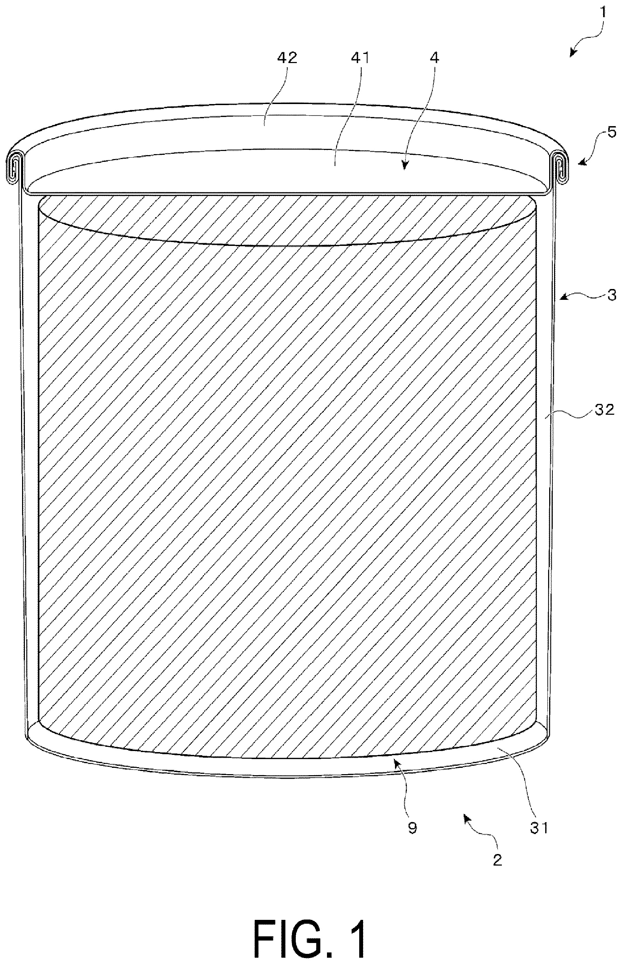

FIG. 1 is a partially cutaway perspective view schematically illustrating an overview of an example of a configuration of a battery 1 according to the present embodiment. The battery 1 has a structure in which a battery portion 9 is accommodated in a battery container 2. The battery container 2 includes a can body 3 and a can lid 4, and the can body 3 and the can lid 4 are joined by a double seaming structure of a seaming portion 5. The battery container 2 is sealed with the can body 3 and the can lid 4 joined to each other by the double seaming structure. For the sake of explanation, FIG. 1 illustrates a state in which the can body 3 and the can lid 4 of the battery container 2 are vertically cut, without cutting the battery portion 9 inside the battery container 2 and a bottom surface portion 31 of the can body 3.

The can body 3 has a bottomed cylindrical shape opening upward. The bottom of the can body 3 is referred to as the bottom surface portion 31, and a side surface of the can body 3 is referred to as a cylindrical portion 32. The opening upper side of the can body 3 is closed by the can lid 4. The can lid 4 has a flat surface portion 41 which is a flat surface that closes the opening portion of the can body 3 and is parallel to the bottom surface portion 31, and a joining portion 42 brought into close contact with the cylindrical portion 32 of the can body 3.

The bottom surface portion 31 and the flat surface portion 41 may have a shape (such as, for example, a bead not illustrated) for improving resistance (rigidity) against deformation due to internal pressure.

The battery portion 9 is accommodated in the sealed internal space of the battery container 2. The battery portion 9 may be any type of battery. The battery portion 9 may be, for example, a lithium-ion battery. The battery portion 9 has the positive electrode and the negative electrode respectively electrically connected to the can body 3 and the can lid 4. In the present embodiment, the can body 3 and the can lid 4 are insulated from each other in the seaming portion 5. Thus, the can body 3 functions as the positive electrode, and the can lid 4 functions as the negative electrode. The positive electrode and the negative electrode may be reversed. Thus, the negative electrode of the battery portion 9 may be connected to the can body, and the positive electrode of the battery portion 9 may be connected to the can lid.

The size of the battery 1 may be, without limitation, approximately 70 mm in diameter and approximately 70 mm in height for example. Without limitation, for example, the can body 3 may be formed of nickel-plated steel, and the can lid 4 may be formed of aluminum. Without limitation, the thickness of the can body 3 may be, for example, about 0.2 mm, and the thickness of the can lid 4 may be, for example, about 0.25 mm. The battery container 2 has, without limitation, a pressure resistance of about 1 MPa, for example.

When the batteries 1 are stacked, the can body 3 of the battery 1 on the upper side enters the inside of the joining portion 42 standing around the flat surface portion 41 of the can lid 4 of the battery 1 on the lower side. As a result, the flat surface portion 41 of the can lid 4 of the battery 1 on the lower side and the bottom surface portion 31 of the can body 3 of the battery 1 on the upper side come into contact with each other. Since the can body 3 and the can lid 4 respectively serve as the positive electrode and the negative electrode, when the batteries 1 are stacked, the batteries 1 are connected in series.

### Double Seaming Structure

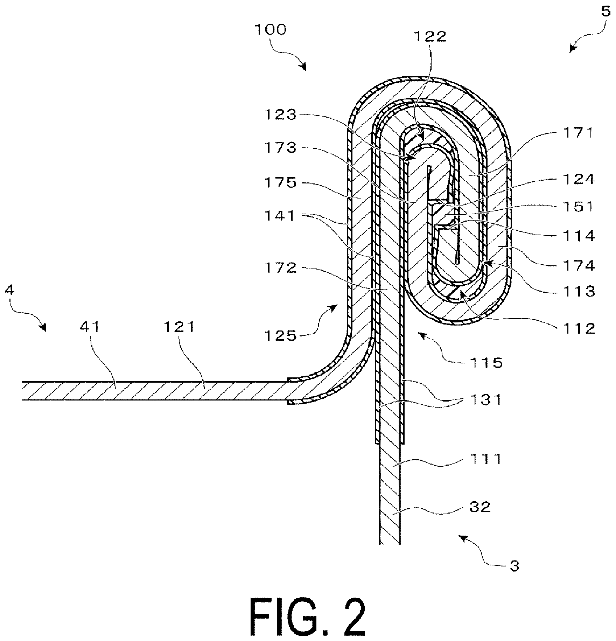

FIG. 2 is an end view illustrating an overview of a double seaming structure 100 in the seaming portion 5 according to the first embodiment. The double seaming structure 100 is formed by a first metal member 111 forming the can body 3 and a second metal member 121 forming the can lid 4. The double seaming structure 100 of the present embodiment is basically a structure similar to a structure generally known as a double seaming structure. That is, a structure in which the second metal member 121 of the can lid 4 and the first metal member 111 of the can body 3 each become twofold, with a curl portion of the can lid 4 rolled and joined, by pressure bonding, to the flange portion of the can body 3.

As illustrated in FIG. 2, the first metal member 111 of the can body 3 forms a body wall 172 continuing from the cylindrical portion 32 and extending upward, and a body hook 171 that is folded back outward from the upper end from the body wall 172 to extend downward. The total length of the body hook 171 and the body wall 172 is, without limitation, about 5 to 10 mm, for example.

The second metal member 121 of the can lid 4 has a cover hook 173 provided so as to enter between the body hook 171 and the body wall 172 from below, a seaming wall 174 that is folded back outward from the lower end of the cover hook 173 and extends upward outside the body hook 171, and a chuck wall 175 that is folded back inward from the upper end of the seaming wall 174 and extends downward inside the body wall 172. The chuck wall 175 is connected to the flat surface portion 41 of the can lid 4.

Unlike a general double seaming structure, in the double seaming structure 100 of the present embodiment, a first turned-back portion 113 is provided at a first end portion 112 which is an end portion of the first metal member 111, that is, an end portion of the body hook 171. The first turned-back portion 113 has a shape in which an end portion is folded, such as a shape formed by a process called hemming bending in which the end portion is folded by 180° and then pressed flat. In the first turned-back portion 113, the first metal member 111 is bent such that a first end surface 114 of the first metal member 111 is located more on the body wall 172 side than the body hook 171.

Unlike a general double seaming structure, in the double seaming structure 100 of the present embodiment, a second turned-back portion 123 having a shape folded by hemming bending is provided at a second end portion 122 which is an end portion of the second metal member 121, that is, at an end portion of the cover hook 173. In the second turned-back portion 123, the second metal member 121 is bent such that a second end surface 124 of the second metal member 121 is located more on the seaming wall 174 side than the cover hook 173.

In the present embodiment, with the double seaming structure 100, a first region 115 including the first end portion 112 of the first metal member 111 and a second region 125 including the second end portion 122 of the second metal member 121 are in close contact with each other and the sealing is maintained. To have electrical insulation between the first metal member 111 and the second metal member 121, a first insulating layer 131 which is a coating film formed by applying a coating material having insulation property is provided in the first region 115 of the first metal member 111 including a region in contact with the second metal member 121. Similarly, a second insulating layer 141 which is a coating film formed by applying a coating material having insulation property is provided in the second region 125 of the second metal member 121 including a region in contact with the first metal member 111. In the present embodiment, since the first metal member 111 and the second metal member 121 function as electrodes of the battery 1, an insulating layer is not provided at least in portions that function as the electrodes.

In the double seaming structure 100 of the present embodiment, the first end surface 114 of the first metal member 111 and the second end surface 124 of the second metal member 121 face each other. Therefore, for insulation, the first insulating layer 131 is also provided on the first end surface 114, and the second insulating layer 141 is also provided on the second end surface 124. For this reason, in the present embodiment, the first insulating layer 131 and the second insulating layer 141 are formed after, for example, punching of the material or the like. In particular, in the example illustrated in FIG. 2, the first insulating layer 131 and the second insulating layer 141 are formed after the first turned-back portion 113 and the second turned-back portion 123 are formed. The insulating layer is not limited to being directly formed on the metal member and may be formed on the metal member after surface processing such as painting or printing is performed.

In the double seaming structure 100, an adhesive 151 solidifies at a portion where the first region 115 and the second region 125 are in contact with each other. The adhesive 151 is a solidifying anaerobic adhesive applied to at least one of the first region 115 or the second region 125 before forming the double seaming structure 100.

The anaerobic adhesive contains an acrylate monomer as a main component, and starts to solidify by contacting metal ions and shutting off air, and an anaerobic adhesive popularly used for screw locking and in a pipe joining portion can be typically used. In the present embodiment, when the metal ions are insufficient for the solidification of the anaerobic adhesive, a reaction activator may be used in combination.

### Method of Manufacturing Battery

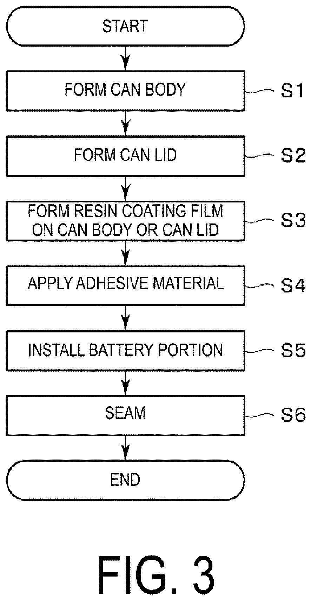

A method of manufacturing the battery 1 will be described. FIG. 3 is a flowchart illustrating an overview of a method of manufacturing a battery according to the present embodiment. First, the can body 3 is formed (step S1), and the can lid 4 is formed (step S2).

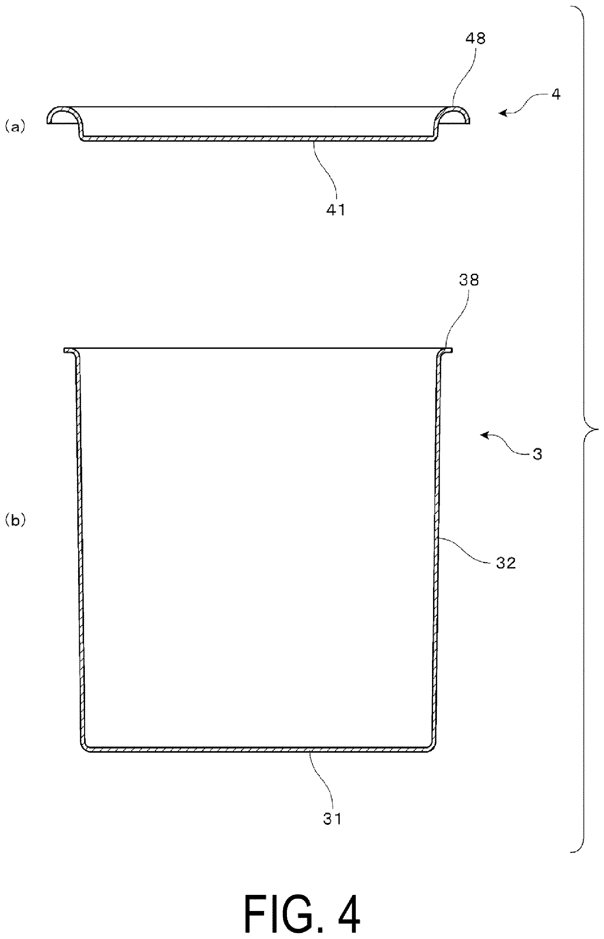

FIG. 4 is a vertical cross-sectional view illustrating an overview of the shapes of the can body 3 and the can lid 4 before the double seaming. As for the can body 3, as illustrated in FIG. 4(b), a cup-shaped member having the bottom surface portion 31 and the cylindrical portion 32 is formed. A flange portion 38 expanding outward is formed at an upper end portion of the cylindrical portion 32. As for the can lid 4, as illustrated in FIG. 4(a), a curl portion 48 having such a shape as to cover the flange portion 38 of the can body 3 is formed at a circumference edge portion of the disc-shaped flat surface portion 41.

An end portion of the flange portion 38 is turned-back to form the first turned-back portion 113. An end portion of the curl portion 48 is turned-back to form the second turned-back portion 123. There are several possible ways for the folding back.

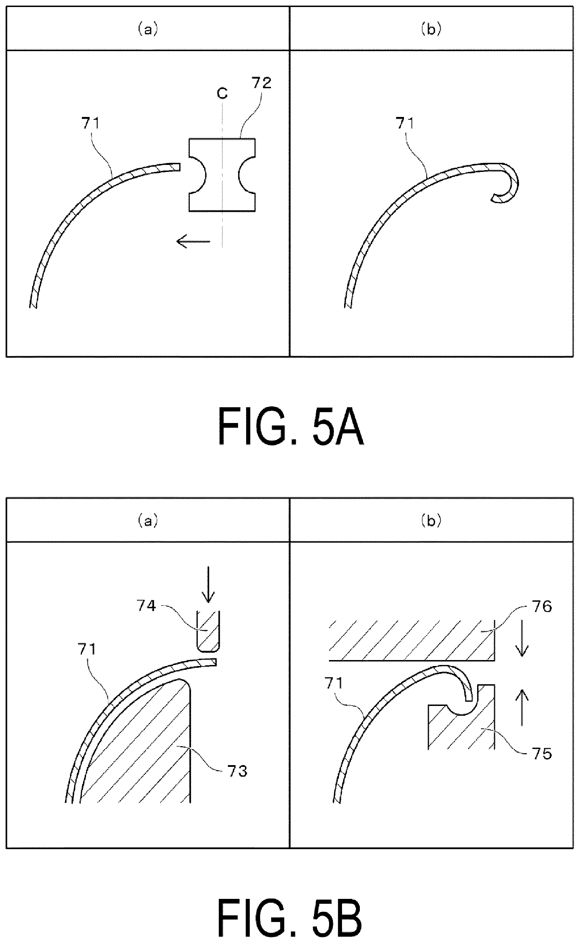

FIG. 5A is a diagram for explaining a first method of forming the turned-back portion. As illustrated in FIG. 5A(a), a roll 72 having a recess portion and rotating around a center axis C is pressed against an end portion of a metal plate 71 to be folded back. As a result, the end portion of the metal plate 71 is bent toward the opposite side as illustrated in FIG. 5A(b). The turned-back portion is formed by clamping the portion thus bent from above and below.

FIG. 5B is a diagram for explaining a second method of forming the turned-back portion. As illustrated in 5B(a), in the first step, the end portion of the metal plate 71 placed on a lower die 73 is pressed downward by an upper die 74 to be bent downward. Next, as illustrated in FIG. 5B(b), in the second step, the end portion of the metal plate 71 is clamped between a substantially U-shaped lower die 75 and an upper die 76 having a flat bottom surface, to be bent toward the opposite side as in the case illustrated FIG. 5A(b). The turned-back portion is formed by clamping the portion thus bent from above and below.

The turned-back portion may be formed before or after the formation of the flange portion 38 of the can body 3 or the curl portion 48 of the can lid 4.

When the can body 3 and the can lid 4 are formed as described above, a resin coating film is formed in the regions including their end portions (step S3). That is, resin is applied to the first region 115 of the first end portion 112 of the can body 3. Then, when the resin is cured, a coating film serving as the first insulating layer 131 is formed. Similarly, resin is applied to the second region 125 of the second metal member 121 of the can lid 4. Then, when the resin is cured, a coating film serving as the second insulating layer 141 is formed.

The first insulating layer 131 and the second insulating layer 141 may be formed before the first turned-back portion 113 and the second turned-back portion 123 are formed. When the insulating layer is formed before the end portion is folded back, the insulating layer is also formed between the folded plates unlike the state illustrated in FIG. 2. Still, the function of the insulating layer remains unchanged.

Subsequently, the anaerobic adhesive in a liquid form is applied to the flange portion 38 of the can body 3 and the curl portion 48 of the can lid 4 which are regions to be rolled into the double seaming structure 100 (step S4).

Before the anaerobic adhesive in a liquid form is applied to the curl portion 48, a sealing compound generally used for a usual can lid may be applied.

Next, the separately prepared battery portion 9 is disposed inside the can body 3, and the can lid 4 is put on the opening of the can body 3 (step S5). At this time, the positive electrode of the battery portion 9 is connected to the can body 3, and the negative electrode of the battery portion 9 is connected to the can lid 4.

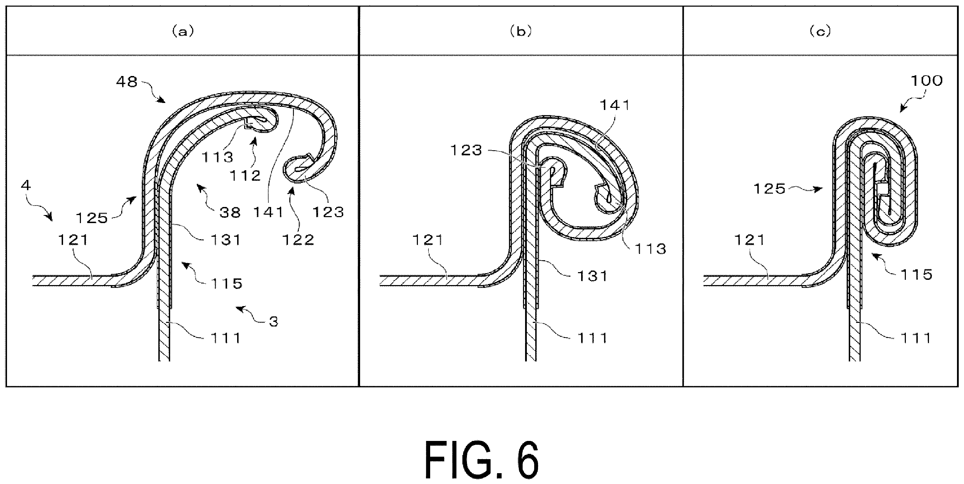

Finally, seaming is performed for the flange portion 38 of the can body 3 and the curl portion 48 of the can lid 4 (step S6). The seaming of the present embodiment will be described with reference to FIG. 6.

As illustrated in FIG. 6(a), at the time of seaming, the curl portion 48 of the can lid 4 is placed on the flange portion 38 of the can body 3. Here, the first turned-back portion 113 is formed at the first end portion 112 of the first metal member 111 forming the flange portion 38. The first insulating layer 131 is formed in the first region 115 of the first metal member 111. The second turned-back portion 123 is formed at the second end portion 122 of the second metal member 121 forming the curl portion 48. The second insulating layer 141 is formed in the second region 125 of the second metal member 121.

In this state, first seaming using a first seaming roll is performed. Thus, as illustrated in FIG. 6(b), the first metal member 111 of the can body 3 and the second metal member 121 of the can lid 4 are rolled. At this time, the first turned-back portion 113 of the first metal member 111 slides while rubbing on the second insulating layer 141 of the second metal member 121. At the same time, the second turned-back portion 123 of the second metal member 121 slides while rubbing on the first insulating layer 131 of the first metal member 111. In particular, a distal end portion of the first turned-back portion 113 is rounded and the anaerobic adhesive in a liquid form functioning as a lubricant is applied to this portion. Thus, the first turned-back portion 113 smoothly slides on the second insulating layer 141. Similarly, a distal end portion of the second turned-back portion 123 is rounded and the anaerobic adhesive in a liquid form functioning as a lubricant is applied to this portion. Thus, the second turned-back portion 123 smoothly slides on the first insulating layer 131.

Next, second seaming using a second seaming roll is performed. Thus, as illustrated in FIG. 6(c), the first region 115 of the first metal member 111 and the second region 125 of the second metal member 121 are firmly pressure-bonded, whereby the double seaming structure 100 is formed. Since air in the double seaming structure 100 is shut off, the applied anaerobic adhesive solidifies in the double seaming structure 100. Therefore, the strength and sealing performance of the double seaming structure 100 are further improved.

The battery 1 is manufactured in the manner described above.

### Double Seaming Structure of Present Embodiment

The double seaming structure 100 according to the present embodiment will be further described. In the double seaming structure 100 of the present embodiment, excellent insulation property achieved by the first insulating layer 131 and the second insulating layer 141 is maintained. This is because the first turned-back portion 113 is provided at the first end portion 112 of the first metal member 111 and the second turned-back portion 123 is provided at the second end portion 122 of the second metal member 121.

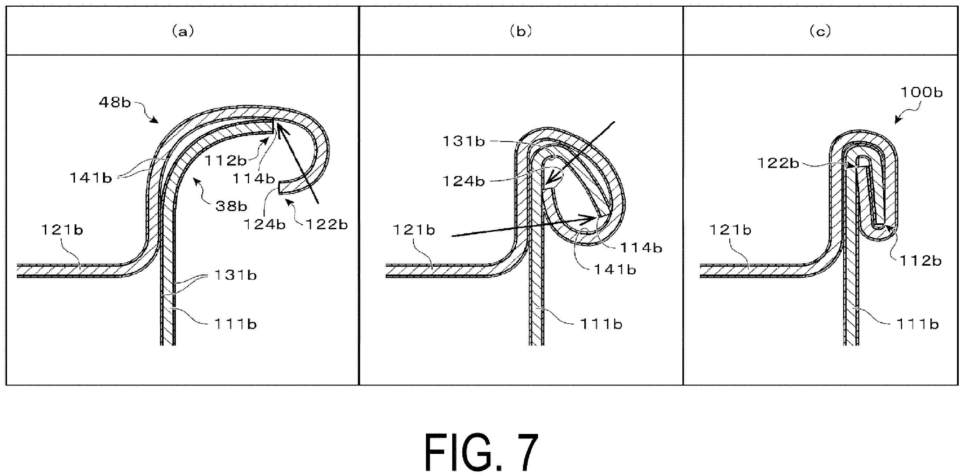

FIG. 7 is a diagram illustrating double seaming according to a comparative example. FIG. 7 illustrates an example in which a double seaming structure is formed by a flange portion 38b of a first metal member 111b and a curl portion 48b of a second metal member 121b, wherein FIG. 7(a) illustrates a state before seaming, FIG. 7(b) illustrates a state after first seaming, and FIG. 7(c) illustrates a state after second seaming.

As illustrated in FIG. 7(a), in this example, the first metal member 111b is not provided with the turned-back portion, a first insulating layer 131b is formed in a state of a plate material, and a first end surface 114b is exposed at a first end portion 112b. Similarly, the second metal member 121b is not provided with the turned-back portion, a second insulating layer 141b is formed in a state of a plate material, and a second end surface 124b is exposed at a second end portion 122b. As indicated by an arrow in FIG. 7(a), the first end surface 114b of the first metal member 111b is in contact with a second insulating layer 141b of the second metal member 121b.

When the first seaming is performed in this state, as indicated by an arrow in FIG. 7(b), the first end surface 114b of the first metal member 111b bites into the second insulating layer 141b of the second metal member 121b to break the second insulating layer 141b. Similarly, the second end surface 124b of the second metal member 121b bites into the first insulating layer 131b of the first metal member 111b to break the first insulating layer 131b.

Such breaking of the insulating layer further progresses in the second seaming. As a result, in a double seaming structure 100b completed by the second seaming, the electrical insulation is ruined at the first end portion 112b of the first metal member 111b and the second end portion 122b of the second metal member 121b, and the first metal member 111b and the second metal member 121b are electrically connected. The case in such a state is not suitable as a battery container as described above.

On the other hand, in the double seaming structure 100 according to the present embodiment, the end portion is rounded due to the turned-back portion, and the end portion smoothly moves on the insulating layer and does not break the insulating layer at the time of manufacturing. Therefore, in the double seaming structure 100 according to the present embodiment, the electrical insulation property between the first metal member 111 and the second metal member 121 is satisfactorily maintained. Thus, the battery container 2 having the double seaming structure 100 according to the present embodiment is suitable as a battery container.

For the electrical insulation between the first metal member and the second metal member, a stretched polymer film may be interposed between these metal members. However, the stretched polymer film is relatively expensive. In view of this, forming the insulating film by the coating film in the present embodiment allows the electrical insulation between the first metal member and the second metal member to be achieved at low cost. In addition, when the polymer film is interposed between the first metal member and the second metal member, adhesion between the first metal member and the second metal member is compromised. Thus, in the double seaming structure in which the polymer film is interposed between the first metal member and the second metal member, sealing performance may be compromised. Meanwhile, in the double seaming structure 100 according to the present embodiment in which the insulating layer is formed of a coating film, high sealing performance is also achieved.

In the double seaming structure 100 of the present embodiment, the first turned-back portion 113 of the first metal member 111 and the second turned-back portion 123 of the second metal member 121 have high rigidity because the metal material is folded in two. Therefore, the double seaming structure 100 of the present embodiment is more rigid than a general double seaming structure such as the double seaming structure 100b according to the comparative example.

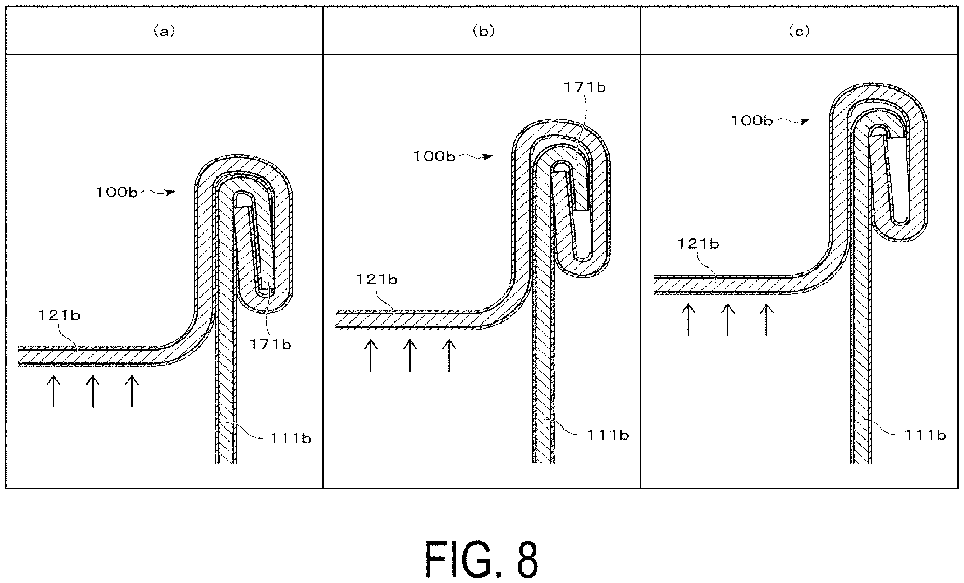

Further, the double seaming structure 100 of the present embodiment features high pressure capacity. FIG. 8 is a diagram illustrating a possible state as a result of rise in internal pressure, with the double seaming structure 100b according to the comparative example. In particular, the first metal member 111b and the second metal member 121b having small thicknesses are likely to result in such as state. That is, reduction in thicknesses of the first metal member 111b and the second metal member 121b leads to a reduction in force with which the first metal member 111b and the second metal member 121b are fastened to each other in the double seaming structure 100b. As a result, when the internal pressure rises, as illustrated in the order of FIGs. 8(a), (b), and (c), a body hook 171b comes off and the double seaming structure 100b is ruined.

On the other hand, in the double seaming structure 100 according to the present embodiment, as illustrated in FIG. 2, the first end portion 112 of the body hook 171 bulges due to the first turned-back portion 113, and the second end portion 122 of the cover hook 173 in contact with the body hook 171 bulges due to the second turned-back portion 123. Such bulges provide resistance to each other, and thus in the double seaming structure 100 of the present embodiment, the coming off of the body hook 171 as in the double seaming structure 100b according to the comparative example illustrated in FIG. 8 is less likely to occur. As a result, as compared with the double seaming structure 100b of Comparative Example, the double seaming structure 100 according to the present embodiment can achieve higher pressure resistance of the battery container 2 or make the first metal member 111 and the second metal member 121 thinner.

In the present embodiment, in particular, the first end surface 114 and the second end surface 124 face each other, and the contact between the first end surface and the second end surface provides a large resistance against deformation.

The effect of increasing the pressure resistance can be achieved without providing an insulating layer on the first metal member 111 and the second metal member 121. Therefore, this configuration can be applied to applications other than applications requiring insulation property such as a battery container.

While the case where the double seaming structure 100 according to the present embodiment is used for the battery container has been described as an example herein, the double seaming structure 100 may obviously be used for joining two metal members not only in the battery but also in other articles.

### Second Embodiment

The second embodiment will be described. Here, differences from the first embodiment will be described, and the same parts will be denoted by the same reference signs, and the description thereof will be omitted.

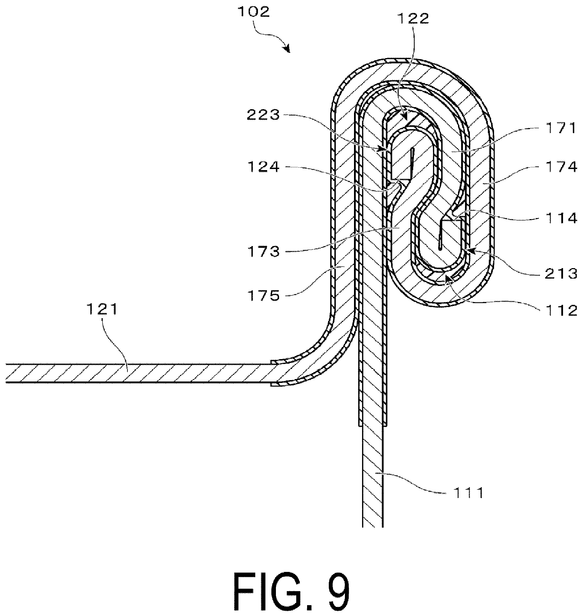

FIG. 9 is an end view illustrating an overview of an example of a configuration of a double seaming structure 102 according to the second embodiment. As illustrated in FIG. 9, in the double seaming structure 102 according to the second embodiment, the fold back directions of a first turned-back portion 213 of the first metal member 111 and a second turned-back portion 223 of the second metal member 121 are opposite to those in the first embodiment. That is, the first turned-back portion 213 is bent such that the first end surface 114 of the first metal member 111 is located more on the seaming wall 174 side than the body hook 171. The second turned-back portion 223 is bent such that the second end surface 124 of the second metal member 121 is located more on the chuck wall 175 side than the cover hook 173.

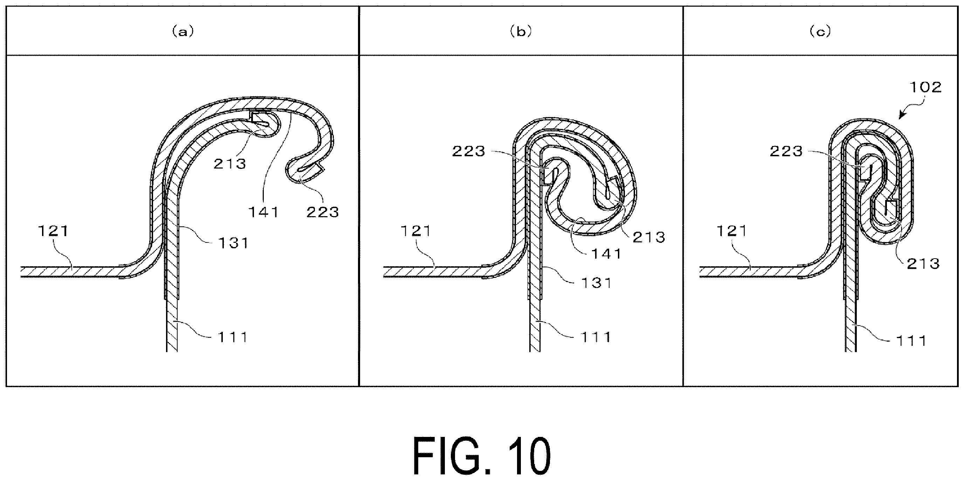

FIG. 10 is a schematic view for explaining double seaming according to the second embodiment. FIGs. 10(a), 10(b), and 10(c) respectively correspond to FIGs. 6(a), 6(b), and 6(c), and respectively illustrate the states before seaming, after first seaming, and after second seaming. Also in the second embodiment, at the time of seaming, the first turned-back portion 213 of the first metal member 111 slides while rubbing on the second insulating layer 141 of the second metal member 121. The distal end portion of the first turned-back portion 213 is rounded and the anaerobic adhesive in a liquid form is applied to this portion. Thus, the first turned-back portion 213 smoothly slides on the second insulating layer 141. At the same time, the second turned-back portion 223 of the second metal member 121 slides while rubbing on the first insulating layer 131 of the first metal member 111. The distal end portion of the second turned-back portion 223 is rounded and the anaerobic adhesive in a liquid form is applied to this portion. Thus, the second turned-back portion 223 smoothly slides on the first insulating layer 131. Thus, also in the double seaming structure 102 of the present embodiment, as in the double seaming structure 100 of the first embodiment, the electrical insulation property between the first metal member 111 and the second metal member 121 achieved by the first insulating layer 131 and the second insulating layer 141 is satisfactorily maintained. Therefore, the battery container 2 having the double seaming structure 102 according to the present embodiment is also suitable as a case for a battery.

Also in the double seaming structure 102 of the present embodiment, the first end portion 112 of the body hook 171 bulges due to the first turned-back portion 213, and the second end portion 122 of the cover hook 173 in contact with the body hook 171 bulges due to the second turned-back portion 223. Such bulges provide resistance to each other, and the body hook 171 is less likely to come off also in the double seaming structure 102 of the present embodiment. As a result, the double seaming structure 102 of the present embodiment can achieve higher pressure resistance of the battery container 2 or make the first metal member 111 and the second metal member 121 thinner.

In addition, in the double seaming structure 102 according to the present embodiment, the first end surface 114 of the first metal member 111 and the second end surface 124 of the second metal member 121 sandwich the first metal member 111 and the second metal member 121 therebetween and do not face each other. Since the first end surface 114 and the second end surface 124 do not come into contact with each other, the insulation property is more easily maintained compared with the double seaming structure 100 according to the first embodiment.

Since the first end surface 114 and the second end surface 124 do not face each other, an insulating layer may not be formed on the first end surface 114 and the second end surface 124. Therefore, in the present embodiment, the degree of freedom of the manufacturing method is high compared with the case of the first embodiment. That is, for example, a coating film having insulation property may be formed in a flat plate state, and then the can body 3 and the can lid 4 may be formed by using the first metal member 111 and the second metal member 121 which are punched out. In this case, the insulating layer is not formed on the first end surface 114 of the punched first metal member 111 and the second end surface 124 of the punched second metal member 121 and the metal is exposed. Still, the insulation property in the double seaming structure 102 is guaranteed.

### Modified Example

Several modified examples of the above-described embodiment will be described. Here, differences from the above embodiment will be described, and the same parts will be denoted by the same reference signs, and the description thereof will be omitted.

### First Modified Example

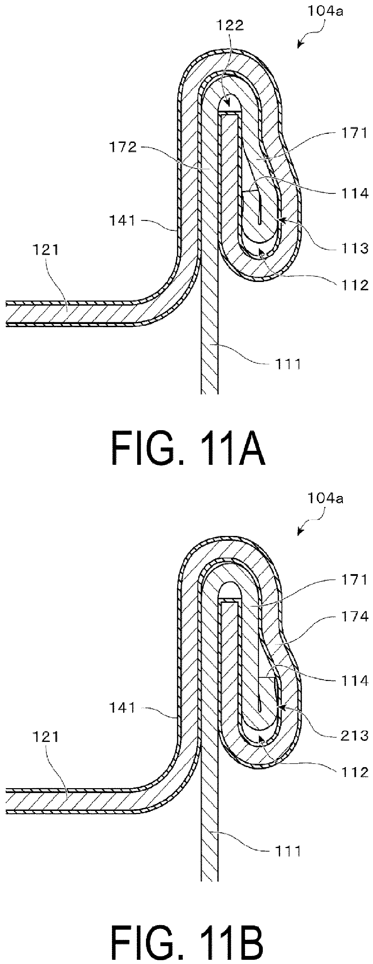

FIG. 11A is an end view illustrating an overview of an example of a configuration of a double seaming structure 104a according to a first modified example. In the first modified example, the first turned-back portion 113 is formed in the first metal member 111, but no turned-back portion is formed in the second metal member 121. In this example, the second insulating layer 141 is formed on the second metal member 121, but no insulating film is formed on the first metal member 111. Since the first turned-back portion 113 is formed at the first end portion 112 of the first metal member 111 and the first end portion 112 is rounded, the second insulating layer 141 is not broken at the time of seaming. If the insulation property of the second end portion 122 of the second metal member 121 is maintained, the insulation property between the first metal member 111 and the second metal member 121 is guaranteed by the second insulating layer 141 formed on the second metal member 121. The first metal member 111 may also be provided with an insulating layer.

The first turned-back portion 113 may be bent such that the first end surface 114 of the first metal member 111 is located more on the body wall 172 side than the body hook 171, as illustrated in FIG. 11A. The first turned-back portion 213 may be bent such that the first end surface 114 of the first metal member 111 is located more on the seaming wall 174 side than the body hook 171 as illustrated in FIG. 11B.

### Second Modified Example

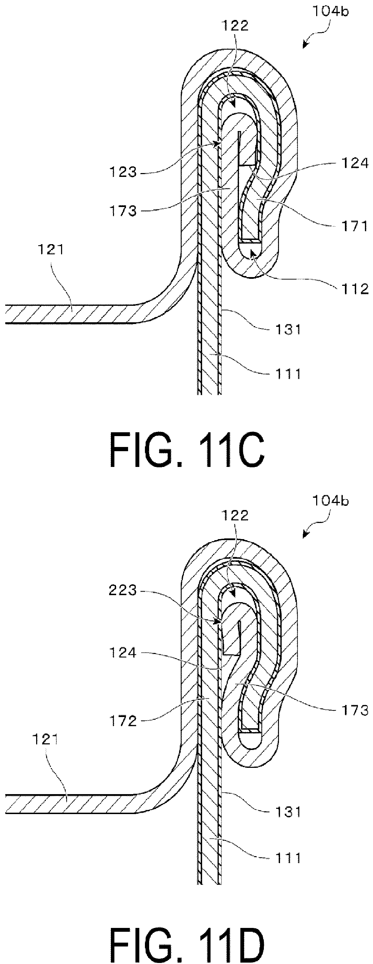

FIG. 11C is an end view illustrating an overview of an example of a configuration of a double seaming structure 104b according to a second modified example. In the second modified example, the second turned-back portion 123 is formed in the second metal member 121, but no turned-back portion is formed in the first metal member 111. In this example, the first insulating layer 131 is formed on the first metal member 111, but no insulating film is formed on the second metal member 121. Since the second turned-back portion 123 is formed at the second end portion 122 of the second metal member 121 and the second end portion 122 is rounded, the first insulating layer 131 is not broken at the time of seaming. If the insulation property of the first end portion 112 of the first metal member 111 is maintained, the insulation property between the first metal member 111 and the second metal member 121 is guaranteed by the first insulating layer 131 formed on the first metal member 111. The second metal member 121 may also be provided with an insulating layer.

The second turned-back portion 123 may be bent such that the second end surface 124 of the second metal member 121 is located more on the body hook 171 side than the cover hook 173, as illustrated in FIG. 11C. The second turned-back portion 223 may be bent such that the second end surface 124 of the second metal member 121 is located more on the body wall 172 side than the cover hook 173, as illustrated in FIG. 11D.

Also in the first embodiment or the second embodiment described above, the insulation property may be achieved by only one of the first insulating layer 131 and the second insulating layer 141 as in the first modified example or the second modified example. However, more reliable insulation is achieved when the first insulating layer 131 and the second insulating layer 141 are both provided.

The double seaming structure 104a according to the first modified example or the double seaming structure 104b according to the second modified example can also provide the same effect as that provided by the above-described embodiment. For example, even if only one of the first turned-back portion 113 and the second turned-back portion 123 is provided, the risk of the body hook 171 coming off can be suppressed to some extent. That is, high pressure resistance of the double seaming structure is achieved. In particular, in a case where the pressure resistance is desired to be improved in an application where the insulation property is not required, the configuration of the first modified example or the second modified example can be effective. When the insulation property is not required, neither the second insulating layer 141 nor the first insulating layer 131 is necessary.

### Third Modified Example

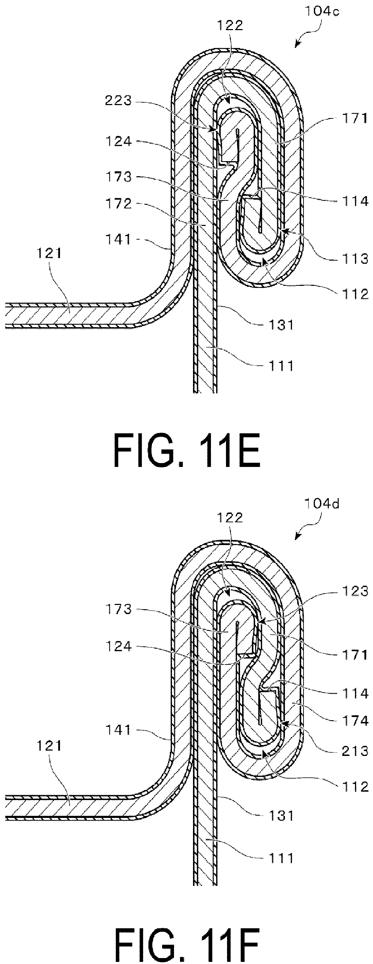

FIG. 11E is an end view illustrating an overview of an example of a configuration of a double seaming structure 104c according to a third modified example. In the third modified example, the first turned-back portion 113 is formed in the first metal member 111, and the second turned-back portion 223 is formed in the second metal member 121. In the present modified example, the first turned-back portion 113 is bent such that the first end surface 114 of the first metal member 111 is located more on the body wall 172 side than the body hook 171 as illustrated in FIG. 11E. The second turned-back portion 223 is bent such that the second end surface 124 of the second metal member 121 is located more on the body wall 172 side than the cover hook 173 as illustrated in FIG. 11E. The double seaming structure 104c of the present modified example can also provide the same effect as that provided by the above-described embodiment. Since the first end surface 114 and the second end surface 124 sandwich the second metal member 121 without facing each other, insulation at the first end surface 114 and the second end surface 124 is likely to be guaranteed. In this case, the insulating layer may not be formed on the first end surface 114 and the second end surface 124.

### Fourth Modified Example

FIG. 11F is an end view illustrating an overview of an example of a configuration of a double seaming structure 104d according to a fourth modified example. In the fourth modified example, the first turned-back portion 213 is formed in the first metal member 111, and the second turned-back portion 123 is formed in the second metal member 121. In the present modified example, the first turned-back portion 213 is bent such that the first end surface 114 of the first metal member 111 is located more on the seaming wall 174 side than the body hook 171 as illustrated in FIG. 11F. The second turned-back portion 123 is bent such that the second end surface 124 of the second metal member 121 is located more on the body hook 171 side than the cover hook 173 as illustrated in FIG. 11F. The double seaming structure 104d of the present modified example can also provide the same effect as that provided by the above-described embodiment. Since the first end surface 114 and the second end surface 124 sandwich the first metal member 111 without facing each other, insulation at the first end surface 114 and the second end surface 124 is likely to be guaranteed. In this case, the insulating layer may not be formed on the first end surface 114 and the second end surface 124.

### Fifth Modified Example

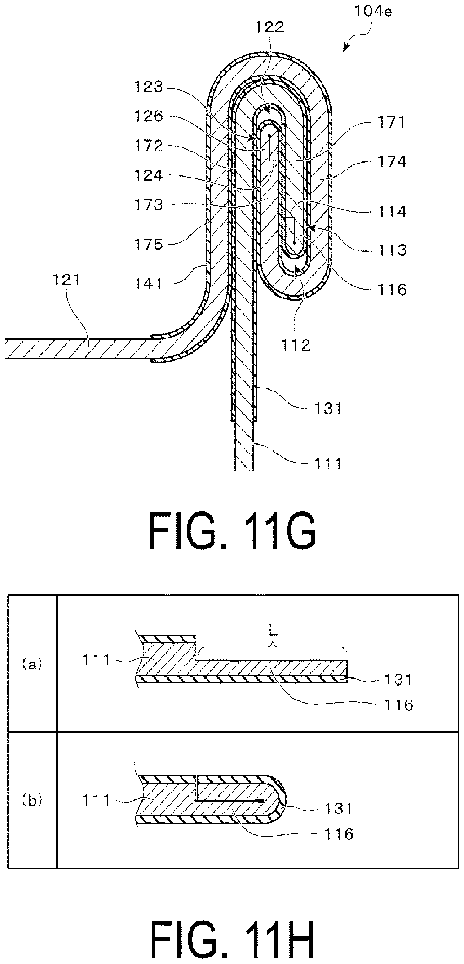

FIG. 11G is an end view illustrating an overview of an example of a configuration of a double seaming structure 104e according to a fifth modified example. In the fifth modified example, at the first turned-back portion 113 of the first end portion 112, the first metal member 111 is processed to be thinner than the other portions. That is, the first turned-back portion 113 of the present modified example includes a first thinned portion 116 thinner than other portions of the first metal member 111.

In the illustrated example, the first thinned portion 116 having approximately half the thickness of the first metal member 111 is provided throughout the first turned-back portion 113. Therefore, the thickness of the first turned-back portion 113 formed by folding the first metal member 111 is equal to the thickness of the portion excluding the first turned-back portion 113. That is, the first end portion 112 including the first turned-back portion 113 has a constant thickness.

FIG. 11H is a diagram illustrating an example of a method of forming the first turned-back portion 113 according to the present modified example. In the processing method illustrated in FIG. 11H, for example, the end portion of the first metal member 111 is thinned by a desired amount to form the first thinned portion 116 by appropriately using a well-known processing method for thinning a metal member such as cutting using a rotary blade or the like, pressing, or rolling. A length L of the first thinned portion 116, that is, a length from a start end of the first thinned portion 116 to a terminal end of the first thinned portion 116 at the end portion of the first metal member 111 is, without limitation, 1 to 2 mm (FIG. 11H(a)), for example. Next, the first turned-back portion 113 is formed by turning back the first thinned portion by 180° so as to fold the thinned portion inward (FIG. 11H(b)). Here, the thinning processing for the end portion is preferable in that press processing produces no cutting waste. While the insulating layer 131 is formed before the first turned-back portion 113 is formed in the illustrated example, the insulating layer 131 may be formed after the first turned-back portion 113 is formed.

Referring back to FIG. 11G, the description will be continued. In the present modified example, the second turned-back portion 123 of the second end portion 122 also has the same configuration as the first turned-back portion 113 of the first end portion 112. At the second turned-back portion 123 of the second end portion 122, the second metal member 121 is processed to be thinner than the other portions. That is, the second turned-back portion 123 of the present modified example includes a second thinned portion 126 thinner than other portions of the second metal member 121.

In the illustrated example, the second thinned portion 126 having a thickness approximately half the thickness of the second metal member 121 is provided throughout the second turned-back portion 123, and the thickness of the second turned-back portion 123 formed by folding the second metal member 121 is equal to the thickness of the portion excluding the second turned-back portion 123. That is, the second end portion 122 including the second turned-back portion 123 has a constant thickness.

The second turned-back portion 123 of the present modified example can be formed by the same processing method as that for the first turned-back portion 113.

The distal end portion of the first end portion 112 of the first metal member 111 and the distal end portion of the second end portion 122 of the second metal member 121 are rounded also with the first turned-back portion 113 and the second turned-back portion 123 of the present modified example. Thus, the second insulating layer 141 and the first insulating layer 131 are not broken at the time of seaming.

In addition, the present modified example can provide the double seaming structure 104e which is thinner than that in the first embodiment or the like.

The first turned-back portion 113 may be processed so as to be thinner than the other portion of the first metal member 111, and the thickness of the first thinned portion 116 may be more than approximately half the thickness of the first metal member 111. In this case, a small thickness is achieved as compared with the first embodiment and the like, and the first turned-back portion 113 bulges at the first end portion 112. Such bulging provides resistance, and the risk of the body hook 171 coming off is suppressed to some extent. That is, high pressure resistance of the double seaming structure is achieved. The same applies to a case where the thickness of the second thinned portion 126 of the second turned-back portion 123 is more than approximately half the thickness of the second metal member 121.

The body hook 171 is less likely to come off, when the thickness of the first thinned portion 116 of the first turned-back portion 113 is more than approximately half the thickness of the first metal member 111, the thickness of the second thinned portion 126 of the second turned-back portion 123 is more than approximately half the thickness of the second metal member 121, and the first end surface 114 of the first metal member 111 and the second end surface 124 of the second metal member 121 face each other in the double seaming structure as in the case of the fold back directions described in the first embodiment. This is because the first end surface 114 and the second end surface 124 provide resistance against deformation of making the body hook 171 come off, while the resistance may not be as high as that in the first embodiment.

In the example illustrated in FIG. 11G, in the first turned-back portion 113, the first metal member 111 is bent such that the first end surface 114 of the first metal member 111 is located on the body wall 172 side of the body hook 171, and in the second turned-back portion 123, the second metal member 121 is bent such that the second end surface 124 of the second metal member 121 is located on the seaming wall 174 side of the cover hook 173. However, the present invention is not limited thereto. The first turned-back portion 113 and the second turned-back portion 123 may be turned-back in any direction. In the first turned-back portion 113, the first metal member 111 may be bent such that the first end surface 114 is located on the seaming wall 174 side of the body hook 171. In the second turned-back portion 123, the second metal member 121 may be bent such that the second end surface 124 is located on the chuck wall 175 side of the cover hook 173. That is, the fold back may be made in any of the directions described in the first embodiment, the second embodiment, the third modified example, and the fourth modified example may be employed.

Also in the fifth modified example, the insulation property may be achieved by only one of the first insulating layer 131 and the second insulating layer 141 as in the first modified example and the second modified example described above. In this case, the insulating layer may be formed on one of the first metal member 111 and the second metal member 121, and the turned-back portion of the present modified example may be provided only on the other metal member on which the insulating layer is not formed.

When the insulation property is not required, neither the first insulating layer 131 nor the second insulating layer 141 is necessary.

Although the present invention has been described above with reference to the preferred embodiment, the present invention is not limited only to the embodiment described above, and various modifications can be made within the scope of the present invention.

For example, while the anaerobic adhesive 151 is used in one preferred embodiment, other types of adhesives may be used, or no adhesive may be used.

The double seaming structure according to the above-described embodiments and modified examples may be used not for a battery container but for other containers and may be used, for example, for a can for a canned product of beverage or food. In this case, the insulating layer may not be provided. The double seaming structure of the above-described embodiments and modified examples allows a can for a canned product or the like to have high sealing performance and pressure resistance.

### Reference Signs List

1 ... Battery
2 ... Battery container
3 ... Can body
31... Bottom surface portion, 32 ... Cylindrical portion, 38 ... Flange portion
4 ... Can lid
41 ... Flat surface portion, 42 ... Joining portion, 48 ... Curl portion
5 ... Seaming portion
9 ... Battery portion
100 ... Double seaming structure
111 ... First metal member, 112 ... First end portion, 113... First turned-back portion
114 ... First end surface, 115 ... First region, 116 ... First thinned portion
121 ... Second metal member, 122 ... Second end portion, 123 ... Second turned-back portion
124 ... Second end surface, 125 ... Second region, 126 ... Second thinned portion
131 ... First insulating layer, 141 ... Second insulating layer
151 ... Adhesive
171 ... Body hook, 172 ... Body wall
173 ... Cover hook, 174 ... Seaming wall, 175 ... Chuck wall

## Claims

1. A double seaming structure, comprising:
a first metal member having a first turned-back portion at a first end portion; and
a second metal member, wherein
a first region including the first end portion of the first metal member and a second region including a second end portion of the second metal member are in close contact with each other and sealed by double seaming.

2. The double seaming structure according to claim 1, wherein the first turned-back portion includes a first thinned portion thinner than other portions of the first metal member.

3. The double seaming structure according to claim 2, wherein
the first thinned portion is provided throughout the first turned-back portion, and
the first end portion including the first turned-back portion has a constant thickness.

4. The double seaming structure according to any one of claims 1 to 3, wherein the second metal member has a second turned-back portion at the second end portion.

5. The double seaming structure according to claim 4, wherein a first end surface of the first metal member and a second end surface of the second metal member sandwich at least one of the first metal member or the second metal member therebetween and do not face each other in the double seaming structure.

6. The double seaming structure according to claim 1 or 2, wherein
the second metal member includes a second turned-back portion at the second end portion, and
a first end surface of the first metal member and a second end surface of the second metal member face each other in the double seaming structure.

7. The double seaming structure according to any one of claims 4 to 6, wherein the second turned-back portion includes a second thinned portion thinner than other portions of the second metal member.

8. The double seaming structure according to claim 4 or 5, wherein
the second turned-back portion includes a second thinned portion thinner than other portions of the second metal member,
the second thinned portion is provided throughout the second turned-back portion, and
the second end portion including the second turned-back portion has a constant thickness.

9. The double seaming structure according to any one of claims 1 to 8, further comprising an insulating layer configured to electrically insulate the first region from the second region.

10. The double seaming structure according to claim 9, wherein the insulating layer is a coating film formed at least in the second region.

11. The double seaming structure according to any one of claims 1 to 10, further comprising an adhesive that solidifies at a portion where the first region and the second region are in contact with each other.

12. The double seaming structure according to claim 11, wherein the adhesive is an anaerobic adhesive.

13. A battery, comprising:
a double seaming structure described in any one of claims 1 to 12; and
a positive electrode material and a negative electrode material accommodated in a space sealed by the first metal member and the second metal member, wherein
one of the positive electrode material and the negative electrode material is connected to the first metal member, and
the other of the positive electrode material and the negative electrode material is connected to the second metal member.

14. A can, comprising:
a double seaming structure described in any one of claims 1 to 8;
a can body formed by one of the first metal member and the second metal member; and
a can lid formed by the other of the first metal member and the second metal member.
